# EUROPEAN PATENT SPECIFICATION

(11) **EP 3 206 430 B1**
(45) Date of publication and mention of the grant of the patent: **03.04.2019**
(21) Application number: 16207267.2
(22) Date of filing: 12.06.2012
(51) Int. Cl.: H04W 28/16, H04L 29/06, H04L 12/14, H04L 12/26, H04Q 3/00, H04L 29/08

(54) **PACKET PROCESSING METHOD, SYSTEM, AND DEVICE**
PAKETVERARBEITUNGSVERFAHREN, SYSTEM UND -EINRICHTUNG
PROCÉDÉ, SYSTÈME ET DISPOSITIF DE TRAITEMENT DE PAQUETS

(43) Date of publication of application: 16.08.2017
(62) Divisional of application: 12879094.6
(73) Proprietor: Huawei Technologies Co., Ltd., Longgang District Shenzhen, Guangdong 518129 (CN)
(72) Inventor: JIN, Weisheng, Shenzhen, Guangdong 518129 (CN)
(74) Representative: Gill Jennings & Every LLP

(56) References cited:
- US-A1- 2008 307 081
- US-A1- 2010 054 257
- US-A1- 2011 202 491
- US-A1- 2011 314 145
- US-A1- 2011 320 555

## Description

### TECHNICAL FIELD

The present invention relates to communications technologies, and in particular, to a packet processing method, system, and device.

### BACKGROUND

With the evolution of mobile communications technologies, in the current mobile communications, a user not only can use services provided by a mobile operator and a mobile service provider but also already can use almost all Internet services with the support of Internet applications for mobile networks, which is the same as fixed broadband communications. Meanwhile, with the development of software and hardware platforms of terminals, it is already very popular to simultaneously run multiple applications (application) or processes (process) that access a network on a multi-tasking operating system of a terminal. On the operating system, due to reasons such as human computer interaction, the applications or processes may be in a foreground (foreground) or background (background) state. In addition, due to differences in a processor and memory resource occupation, the applications or processes in the foreground or background state may further be subdivided into different states, such as background running and background suspension. A foreground application or process is generally more sensitive to user experience.

However, when a core network gateway or a mobile access network executes local service quality control or air interface scheduling, and when an application or a process in a background state occupies too many network resources, in the case of limited network resources, an application or a process in a foreground state of a same user may fail to obtain sufficient resources or a network response may be not timely, and an application or a process in a foreground state of a different user sharing a same network resource may also fail to obtain sufficient resources or a network response may be not timely. In addition, a media source node and a content delivery network through which a data media stream may pass during transmission do not adjust a media coding rate according to the different state of the application or the process, and therefore the network transmission efficiency is not high.

Prior art US 2008/0307081 A1 describes an approach to managing non-session-based services. US 2011/0202491 A1 describes a method of operating a policy and charging rules node. US 2011/0314145 A1 describes a method of managing network service usage activity.

### SUMMARY

The present invention provides a packet processing method, system, and device to enable an application or a process in a foreground state of a same user or an application or a process in a foreground state of a different user of a same network resource to obtain sufficient or more resources or enable a network response to be more timely in the case of limited network resources, and effectively improve the network transmission efficiency.

Aspects of the invention are set out in the independent claims 1 (method), 5 (apparatus) and 9 (computer-readable storage medium). Further detailed embodiments are defined in the dependent claims.

Technical effects of the present invention are as follows: A description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data
stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without departing from the scope as defined by the appended claims.
FIG. 1 is a flowchart of an embodiment of a packet processing method according to the present invention;
FIG. 2 is a flowchart of another embodiment of a packet processing method according to the present invention;
FIG. 3 is a flowchart of still another embodiment of a packet processing method according to the present invention;
FIG. 4 is a schematic structural diagram of an embodiment of a network-side device according to the present invention;
FIG. 5 is a schematic structural diagram of another embodiment of a network-side device according to the present invention;
FIG. 6 is a schematic structural diagram of still another embodiment of a network-side device according to the present invention; and
FIG. 7 is a schematic structural diagram of an embodiment of a user terminal according to the present invention.

### DESCRIPTION OF EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

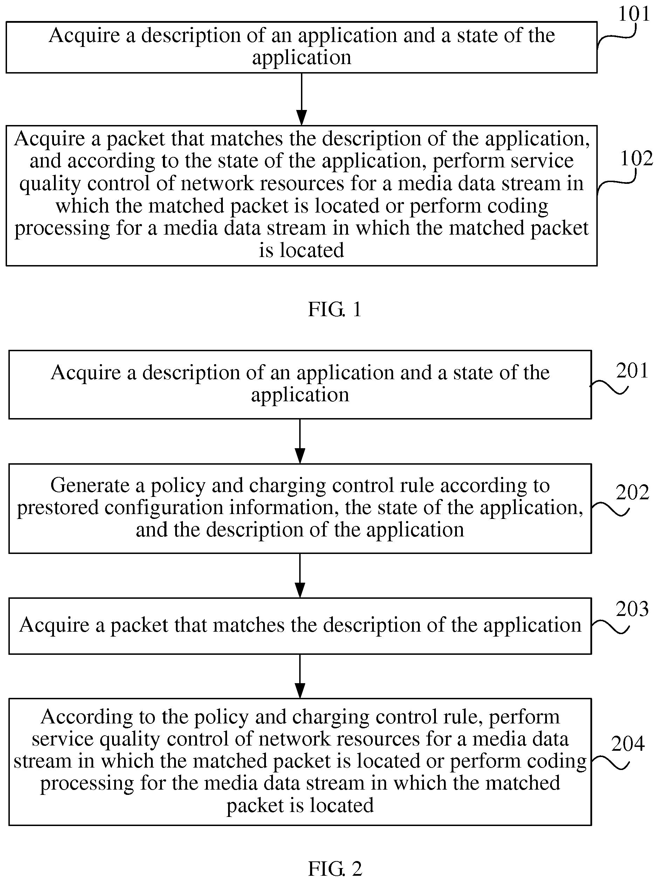

FIG. 1 is a flowchart of an embodiment of a packet processing method according to the present invention. As shown in FIG. 1, an executor of the method of this embodiment is a mobile access network gateway, and the method includes:
Step 101: Acquire a description of an application and a state of the application.

In this embodiment, preferably, the description of the application may be an identifier of the application or a stream description of the application. The state of the application may be classified into a foreground state and a background state, and the background state may be one of the following: background running, background suspension, screen lockup, screensaver, screen off, and a state that a user terminal is not used by a user.

In addition, it should be noted that an application may invoke multiple processes or be formed by multiple processes, and therefore the application is uniformly used to represent an application and a process in each embodiment of the present invention.

Step 102: Acquire a packet that matches the description of the application, and according to the state of the application, perform service quality control of network resources for a media data stream in which the matched packet is located or perform coding processing for a media data stream in which the matched packet is located.

In this embodiment, a description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the method embodiment shown in FIG. 1, a specific implementation manner of step 101 may be one of the following manners:
First: Parse a first packet in an application layer message at a user plane of the user terminal, capture a packet carrying a network-specific address, and acquire the description of the application and the state of the application from the packet carrying the network-specific address.
   Specifically, the network-specific address may be queried and obtained through a domain name server by using an address domain name of a mobile access network gateway acquired when the user terminal interacts with a mobile access network in an earlier stage, or may be a fixed IP (plus a port number) address, for example, 192.168.254.254 (:8899). In addition, the network-specific address may be specifically carried in a header of the first packet.
Second: Acquire the description of the application and the state of the application from a received radio resource control protocol (Radio Resource Control; RRC for short) message that is sent by the user terminal.
   Specifically, the user terminal sends the description of the application and the state of the application by invoking a radio protocol stack of the user terminal and using the RRC message. More specifically, the RRC message is a radio resource control connection reconfiguration message (RRC Connection Reconfiguration), or a radio resource control connection setup message (RRC Connection Setup), a radio resource control connection re-establishment message (RRC Connection Re-establishment), or the like. In addition, more preferably, the description of the application and the state of the application may also be carried in a radio resource configuration cell of dedicated signaling.
Third: Acquire the description of the application and the state of the application from a received control plane message that is sent by a mobility management entity.
   Specifically, the user terminal may send the description of the application and the state of the application to the mobility management entity by using a non-access-stratum (Non-Access-Stratum; NAS for short) message between the user terminal and the mobility management entity, and then the mobility management entity sends them to the mobile access network by using the control plane message. More specifically, the user terminal sends them by invoking the radio protocol stack of the user terminal and using the NAS message, where the NAS message is used to transmit information such as PDN connection setup and modification and bearer resource allocation or modification between an MME and a UE. Alternatively, the user terminal may also carry the description of the application and the state of the application in a cell of the dedicated signaling. After receiving the description of the application and the state of the application that are sent by the user terminal, the mobility management entity sends the description of the application and the state of the application to the mobile access network by using the control plane message (for example, by using the S1 Application Protocol (S1 Application Protocol; S1AP for short), Radio Access Network Application Part (Radio Access Network Application Part; RANAP for short), or Base Station Subsystem General Packet Radio Service technology (General Packet Radio Service; GPRS for short) Protocol (Base Station Subsystem GPRS Protocol; BSSGP for short)) between the mobility management entity and the mobile access network.
Fourth: Receive the identifier of the application and the state of the application that are sent by the user terminal by using an application layer protocol of the application; or
   receive the state of the application that is sent by the user terminal by using the application layer protocol of the application, and identify received packets, so as to acquire the identifier of the application or the stream description of the application.

Specifically, the state of the application of the user terminal or the state of the application and the identifier of the application are carried by the application layer protocol of the application. Taking that the application layer protocol is the Hypertext Transport Protocol (Hypertext Transport Protocol; HTTP for short) protocol as an example, a detailed description is as follows:
Preferably, when sending the foregoing request to the mobile access network by using an application layer signaling message such as FORESTATUS or BACKSTATUS, the user terminal may directly indicate an application state of a user terminal application (including a Web application, a web platform application, or a web application page) that accesses a URI. The URI is a network resource that the application accesses.

Alternatively, the application state of the user terminal application that accesses the URI is indicated by using an application layer signaling message such as STATUS, GET, or HEAD, adding a new request header such as Appstatus-foreground and Appstatus-background into the application layer signaling message, and sending a request attached with the request header to the mobile access network.

In addition, the state of the application may also be carried by using another field of the HTTP protocol; or similar extension is performed by using another application layer protocol, for example, the File Transfer Protocol (File Transfer Protocol; FTP for short), various Peer-to-Peer (Peer-to-Peer; P2P) protocols, the Independent Computing Architecture (Independent Computing Architecture, ICA for short) protocol, the Remote Desktop Protocol (Remote Desktop Protocol; RDP for short), or the like, so as to support sending of the state of the application. The another application layer protocol is not enumerated herein.

Fifth: Receive the identifier of the application and the state of the application that are sent by the user terminal by using an application layer protocol of a specified application; or
receive the state of the application that is sent by the user terminal by using the application layer protocol of the specified application, and identify a second packet in the application layer message at the user plane of the user terminal, so as to acquire the identifier of the application or the stream description of the application.

In this embodiment, the second packet is similar to the first packet, and a difference lies in that: An IP address carried in the header of the first packet is a network-specific address; and an IP address carried in a header of the second packet is an IP address acquired by the terminal by resolving its domain name.

In this embodiment, a specified application may be created on the user terminal, and the state of the application or the state of the application and the identifier of the application that need to be sent are sent by using an application layer protocol of the specified application. It should be noted that the application layer protocol of the specified application may be FTP, a P2P protocol, the ICA protocol, RDP, or the like, which is not enumerated herein.

Further, in still another embodiment of the present invention, based on the foregoing embodiments, a specific implementation manner of acquiring a packet that matches the description of the application in step 102 is one of the following two manners:
First: When a description of an application is an identifier of the application, parse received packets to acquire service types or host addresses of the received packets, and acquire a packet that matches the identifier of the application from the received packets according to a mapping relationship between an identifier of an application and a service type or a mapping relationship between an identifier of an application and a host address.
   Specifically, the received packets may be parsed by using a deep packet inspection (Deep Packet Inspection; DPI for short) function.
Second: When a description of an application is a stream description of the application, acquire a packet that matches the stream description of the application directly.

Further, preferably, a specific implementation manner of performing, according to the state of the application, service quality control of network resources for the media data stream in which the matched packet is located or performing, according to the state of the application, coding processing for the media data stream in which the matched packet is located in step 102 is one of the following manners:
When the state of the application is the foreground state, a bandwidth of the media data stream in which the matched packet is located may be improved, that is, a bandwidth for the application to access a network may be improved; and/or a scheduling priority of the media data stream in which the matched packet is located may be improved; or
when the state of the application is the foreground state, a coding rate of the media data stream in which the matched packet is located may be improved; or
when the state of the application is the background state, a bandwidth of the media data stream in which the matched packet is located may be reduced, that is, a bandwidth for the application to access a network may be reduced; and/or a scheduling priority of the media data stream in which the matched packet is located may be reduced; or
when the state of the application is the background state, a coding rate of the media data stream in which the matched packet is located may be reduced; for example, preferably, a video coding rate of the media data stream may be reduced, and an audio coding rate may be maintained, thereby ensuring listening experience of a user. In addition, to more effectively reduce network resource occupation of the application in the background state, the coding rate of the media data stream may also be reduced to zero.

In this embodiment, the background state may be one of the following: background running, background suspension, screen lockup, screensaver, screen off, and a state that a user terminal is not used by a user.

It should be noted that adjustment of the coding rate of the media data stream may be obtained by using a different resolution ratio, a different color or color gradation quality, a different coding format, a different algorithm, or the like.

In this embodiment, in the case of limited network resources, because differential processing is performed for a different application state, an application in a foreground state of a same user can obtain sufficient or more resources or a network response may be more timely, or an application in a foreground state of a different user sharing a same network resource can obtain sufficient or more resources or network response may be more timely. In addition, a media source node and a content delivery network through which a data media stream may pass during transmission may also adjust a coding rate of the data media stream according to an application state of an application, thereby improving the network transmission efficiency.

FIG. 2 is a flowchart of another embodiment of a packet processing method according to the present invention. As shown in FIG. 2, an executor of this embodiment is a network-side device, and the method includes:
Step 201: Acquire a description of an application and a state of the application.

Preferably, the state of the application includes a foreground state and a background state, and the background state includes one of the following: background running, background suspension, screen lockup, screensaver, screen off, and a state that a user terminal is not used by a user.

Step 202: Generate a policy and charging control rule according to prestored configuration information (for example, setting of a rule generating manner predefined by an operator based on time, a position, a user, or the like), the state of the application, and the description of the application.

Preferably, the policy and charging control rule includes a stream description of the application, service information, and an identifier of the application or includes the stream description of the application, service information, and a service type. The service information may include bandwidth and/or service quality information.

Step 203: Acquire a packet that matches the description of the application.

Step 204: According to the policy and charging control rule, perform service quality control of network resources for a media data stream in which the matched packet is located or perform coding processing for a media data stream in which the matched packet is located.

Preferably, when the state of the application is the foreground state, a specific implementation manner of performing, according to the policy and charging control rule, service quality control of network resources for a media data stream in which the matched packet is located is as follows:
improving a bandwidth of the media data stream in which the matched packet is located; and/or
improving a scheduling priority of the media data stream in which the matched packet is located.

A specific implementation manner of performing, according to the state of the application, coding processing for a media data stream in which the matched packet is located is as follows:
improving a coding rate of the media data stream in which the matched packet is located.

When the state of the application is the background state, a specific implementation manner of performing, according to the policy and charging control rule, service quality control of network resources for a media data stream in which the matched packet is located is as follows:
reducing a bandwidth of the media data stream in which the matched packet is located; and/or
reducing a scheduling priority of the media data stream in which the matched packet is located.

A specific implementation manner of performing, according to the state of the application, coding processing for a media data stream in which the matched packet is located is as follows:
reducing a coding rate of the media data stream in which the matched packet is located.

In this embodiment, a description of an application and a state of the application are acquired, a policy and charging control rule is generated according to prestored configuration information, the state of the application, and the description of the application, a packet that matches the description of the application is acquired, and then according to the policy and charging control rule, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in still another embodiment of the present invention, based on the embodiment shown in FIG. 2, the description of the application may include the identifier of the application and/or the stream description of the application, and step 201 may be implemented in the following specific implementation manners:
First: Parse a first packet in an application layer message at a user plane of the user terminal, capture a packet carrying a network-specific address, and acquire the identifier of the application and the state of the application from the packet carrying the network-specific address; or
   parse an application layer packet at the user plane of the user terminal, capture a packet of a network-specific address, acquire the identifier of the application and the state of the application from the packet, and then query a mapping relationship between an identifier of an application and a stream description of an application, so as to acquire the stream description of the application corresponding to the identifier of the application.
   Specifically, the network-specific address may be queried and obtained through a domain name server by using an address domain name of a mobile access network gateway acquired when the user terminal interacts with a mobile access network in an earlier stage, or may be a fixed IP (plus a port number) address, for example, 192.168.254.254 (:8899).
Second: Receive the identifier of the application and the state of the application that are sent by the user terminal by using an application layer protocol of the application; or
   receive the state of the application that is sent by the user terminal by using the application layer protocol of the application, and identify a second packet in the application layer message at the user plane of the user terminal, so as to acquire the identifier of the application or the stream description of the application; or
   receive the identifier of the application and the state of the application that are sent by the user terminal by using the application layer protocol of the application, and query a mapping relationship between an identifier of an application and a stream description of an application, so as to acquire the stream description of the application corresponding to the identifier of the application.

It should be noted that in this embodiment, the second packet is similar to the first packet, and a difference lies in that: An IP address carried in a header of the first packet is a network-specific address; and an IP address carried in a header of the second packet is an IP address acquired by the terminal by resolving its domain name.

Specifically, the state of the application and the identifier of the application of the user terminal or the state of the application is carried by the application layer protocol of the application. Taking that the application layer protocol is the HTTP protocol as an example, a detailed description is as follows:
Preferably, when sending the foregoing request to the mobile access network by using an application layer signaling message such as FORESTATUS or BACKSTATUS, the user terminal may directly indicate an application state of a user terminal application (including a Web application, a web platform application, or a web application page) that accesses a URI. The URI is a network resource that the application accesses.

Alternatively, the application state of the user terminal application that accesses the URI is indicated by using an application layer signaling message such as STATUS, GET, or HEAD, adding a new request header such as Appstatus-foreground and Appstatus-background into the application layer signaling message, and sending a request attached with the request header to the mobile access network.

In addition, the state of the application may also be carried by using another field of the HTTP protocol; or similar extension is performed by using another application layer protocol, for example, FTP, a P2P protocol, the ICA protocol, RDP, or the like, so as to support sending of the state of the application. The another application layer protocol is not enumerated herein.

Third: Receive the identifier of the application and the state of the application that are sent by the user by using an application layer protocol of a specified application; or
receive the state of the application that is sent by the user terminal by using the application layer protocol of the specified application, and identify received packets, so as to acquire the identifier of the application or the stream description of the application; or
receive the identifier of the application and the state of the application that are sent by the user terminal by using the application layer protocol of the specified application, and query a mapping relationship between an identifier of an application and a stream description of an application, so as to acquire the stream description of the application corresponding to the identifier of the application.

In this embodiment, a specified application may be created on the user terminal, and the state of the application or the state of the application and the identifier of the application that need to be sent are sent by using an application layer protocol of the specified application. It should be noted that the application layer protocol of the specified application may be FTP, a P2P protocol, the ICA protocol, RDP, or the like, which is not enumerated herein.

Fourth: Parse a first packet in an application layer message at the user plane of the user terminal, capture a packet carrying a network-specific address, and acquire the identifier of the application, the stream description of the application, and the state of the application from the packet carrying the network-specific address.

Specifically, the network-specific address may be queried and obtained through a domain name server by using an address domain name of a mobile access network gateway acquired when the user terminal interacts with a mobile access network in an earlier stage, or may be a fixed IP (plus a port number) address, for example, 192.168.254.254 (:8899).

Further, in another embodiment of the present invention, based on the embodiment shown in FIG. 2, after step 203, the method may further include:
acquiring a service information identifier corresponding to the matched packet, and encapsulating the service information identifier in the matched packet; and
sending the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located.

The service information identifier includes the state of the application or the state of the application and one or a combination of the following: a service type of the matched packet, a user priority, and an operator policy.

For example, in this embodiment, the service information identifier may be in a GTP-U protocol header, a BSSGP protocol header, a PMIP protocol header, or a GRE protocol header that encapsulates a packet and is received by an access network gateway, or may be carried in a DSCP or TOS field of an IP header of a packet.

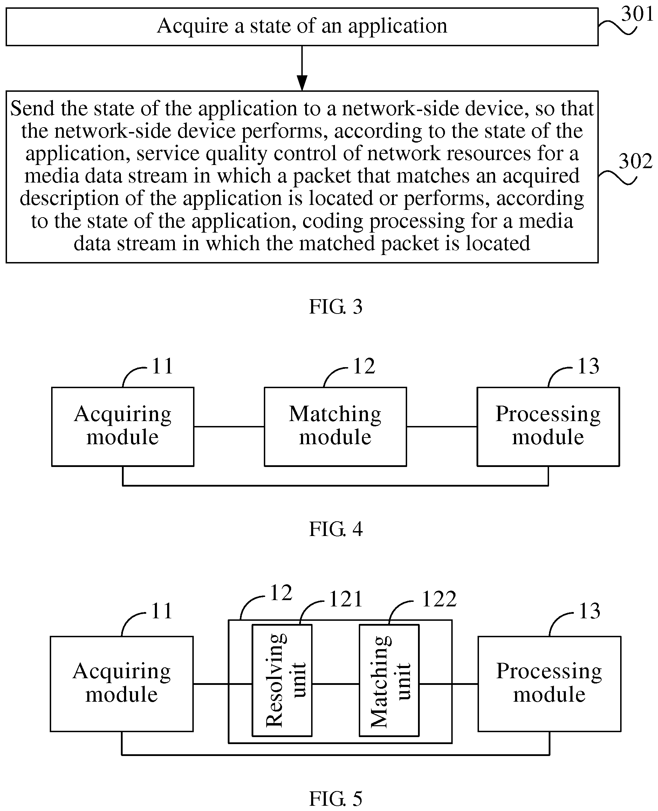

FIG. 3 is a flowchart of still another embodiment of a packet processing method according to the present invention. As shown in FIG. 3, the method of this embodiment includes:
Step 301: Acquire a state of an application.
Step 302: Send the state of the application to a network-side device, so that the network-side device performs, according to the state of the application, service quality control of network resources for a media data stream in which a packet that matches an acquired description of the application is located or performs, according to the state of the application, coding processing for a media data stream in which the matched packet is located.

In this embodiment, a state of the application acquired by a user terminal is sent to a network-side device, so that the network-side device may perform, according to the state of the application, service quality control of network resources for a media data stream in which a packet that matches the acquired description of the application is located or perform, according to the state of the application, coding processing for a media data stream in which the matched packet is located. Because the network-side device may perform differential processing for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the embodiment shown in FIG. 3, the method may further include:
acquiring the description of the application, where the description of the application includes an identifier of the application or the identifier of the application and a stream description of the application.

Then, step 302 may specifically be:
sending the description of the application and the state of the application to the network-side device.

In addition, preferably, a specific implementation manner of step 302 is one of the following manners:
sending an application layer message at a user plane of the user terminal to the network-side device, so that the network-side device parses a first packet in the application layer message, captures a packet carrying a network-specific address, and acquires the description of the application and the state of the application from the packet carrying the network-specific address; or
sending an RRC message carrying the description of the application and the state of the application to the network-side device, so that the network-side device acquires the description of the application and the state of the application from the RRC message; or
sending a non-access-stratum message carrying the description of the application and the state of the application to a mobility management entity, where the mobility management entity sends a control plane message carrying the description of the application and the state of the application to the network-side device, so that the network-side device acquires the description of the application and the state of the application from the control plane message; or
sending the state of the application or the identifier of the application and the state of the application by using an application layer protocol of the application; or
sending the state of the application or the identifier of the application and the state of the application by using an application layer protocol of a specified application.

It should be further noted that when the application layer message at the user plane of the user terminal is sent to the network-side device, the network-side device may further identify a second packet in the application layer message, so as to acquire the identifier of the application and the stream description of the application.

The second packet is similar to the first packet, and a difference lies in that: An IP address carried in a header of the first packet is a network-specific address; and an IP address carried in a header of the second packet is an IP address acquired by the terminal by resolving its domain name.

FIG. 4 is a schematic structural diagram of an embodiment of a network-side device according to the present invention. As shown in FIG. 4, the network-side device of this embodiment includes an acquiring module 11, a matching module 12, and a processing module 13, where the acquiring module 11 is configured to acquire a description of an application and a state of the application, the matching module 12 is configured to acquire a packet that matches the description of the application acquired by the acquiring module 11, and the processing module 13 is configured to: according to the state of the application acquired by the acquiring module 11, perform service quality control of network resources for a media data stream in which the matched packet acquired by the matching module 12 is located or perform coding processing for a media data stream in which the matched packet is located.

The network-side device of this embodiment may execute the technical solution of the method embodiment shown in FIG. 1. Its implementation principle is similar, and therefore no further details are provided herein.

It should be further noted that the network-side device of this embodiment may specifically be an access network gateway.

In this embodiment, a description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

FIG. 5 is a schematic structural diagram of another embodiment of a network-side device according to the present invention. Based on the embodiment shown in FIG. 4, as shown in FIG. 5, the matching module 12 includes a resolving unit 121 and a matching unit 122, where the resolving unit 121 is configured to parse received packets to acquire service types or host addresses of the received packets, and the matching unit 122 is configured to: when the description of the application acquired by the acquiring module 11 is an identifier of the application, according to a mapping relationship between an identifier of an application and a service type or a mapping relationship between an identifier of an application and a host address, acquire a packet that matches the identifier of the application from the received packets.

Further, in still another embodiment of the present invention, based on the embodiment shown in FIG. 4, the acquiring module 11 is specifically configured to parse a first packet in an application layer message at a user plane of the user terminal, capture a packet carrying a network-specific address, and acquire the description of the application and the state of the application from the packet carrying the network-specific address; or
the acquiring module 11 is specifically configured to acquire the description of the application and the state of the application from a received RRC message that is sent by the user terminal; or
the acquiring module 11 is specifically configured to acquire the description of the application and the state of the application from a received control plane message that is sent by a mobility management entity; or
the acquiring module 11 is specifically configured to receive the identifier of the application and the state of the application that are sent by the user terminal by using an application layer protocol of the application; or
the acquiring module 11 is specifically configured to receive the state of the application that is sent by the user terminal by using the application layer protocol of the application, and identify a second packet in the application layer message at the user plane of the user terminal, so as to acquire the identifier of the application or a stream description of the application; or
the acquiring module 11 is specifically configured to receive the identifier of the application and the state of the application that are sent by the user terminal by using an application layer protocol of a specified application; or
the acquiring module 11 is specifically configured to receive the state of the application that is sent by the user terminal by using the application layer protocol of the specified application, and identify a second packet in the application layer message at the user plane of the user terminal, so as to acquire the identifier of the application or the stream description of the application, where:
the description of the application is the identifier of the application or the stream description of the application.

Further, in another embodiment of the present invention, based on the embodiments of the network-side device, the processing module 13 is specifically configured to, when the state of the application is a foreground state, improve a bandwidth of the media data stream in which the matched packet is located and/or improve a scheduling priority of the media data stream in which the matched packet is located; or
the processing module 13 is specifically configured to: when the state of the application is a foreground state, improve a coding rate of the media data stream in which the matched packet is located.

The processing module 13 is specifically configured to: when the state of the application is a background state, reduce a bandwidth of the media data stream in which the matched packet is located and/or reduce a scheduling priority of the media data stream in which the matched packet is located;
or
the processing module 13 is specifically configured to: when the state of the application is a background state, reduce a coding rate of the media data stream in which the matched packet is located.

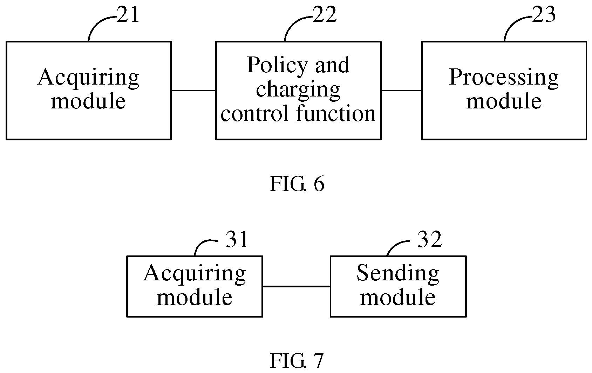

FIG. 6 is a schematic structural diagram of still another embodiment of a network-side device according to the present invention. As shown in FIG. 6, the network-side device of this embodiment includes an acquiring module 21, a policy and charging control function 22, and a processing module 23, where the acquiring module 21 is configured to acquire a description of an application and a state of the application, the policy and charging control function 22 is configured to generate a policy and charging control rule according to prestored configuration information and the state of the application and the description of the application that are acquired by the acquiring module 21, and the processing module 23 is configured to acquire a packet that matches the description of the application acquired by the acquiring module 21, and according to the policy and charging control rule generated by the policy and charging control function 22, perform service quality control of network resources for a media data stream in which the matched packet is located or perform coding processing for a media data stream in which the matched packet is located.

The network-side device of this embodiment may execute the technical solution of the method embodiment shown in FIG. 2. Its implementation principle is similar, and therefore no further details are provided herein.

In addition, the acquiring module 21 may specifically be an application layer server or a service identification functional entity, and the processing module 23 may specifically be a packet data network gateway or another core network gateway.

In this embodiment, a description of an application and a state of the application are acquired, a policy and charging control rule is generated according to prestored configuration information, the state of the application, and the description of the application, a packet that matches the description of the application is acquired, and then according to the policy and charging control rule, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the embodiment shown in FIG. 6, the description of the application may include an identifier of the application and/or a stream description of the application, and the acquiring module 21 is specifically configured to parse an application layer packet at a user plane of the user terminal, capture a packet of a network-specific address, and acquire the identifier of the application and the state of the application from the packet; or
the acquiring module 21 is specifically configured to parse a first packet in an application layer message at the user plane of the user terminal, capture a packet carrying a network-specific address, acquire the identifier of the application and the state of the application from the packet carrying the network-specific address, and then query a preset mapping relationship between an identifier of an application and a stream description of an application, so as to acquire the stream description of the application corresponding to the identifier of the application; or
the acquiring module 21 is specifically configured to receive the identifier of the application and the state of the application that are sent by the user terminal by using an application layer protocol of the application; or
the acquiring module 21 is specifically configured to receive the state of the application that is sent by the user terminal by using the application layer protocol of the application, and identify a second packet in the application layer message at the user plane of the user terminal, so as to acquire the identifier of the application or the stream description of the application; or
the acquiring module 21 is specifically configured to receive the identifier of the application and the state of the application that are sent by the user terminal by using the application layer protocol of the application, query a mapping relationship between an identifier of an application and a stream description of an application, so as to acquire the stream description of the application corresponding to the identifier of the application; or
the acquiring module 21 is specifically configured to receive the identifier of the application and the state of the application that are sent by the user by using an application layer protocol of a specified application; or
the acquiring module 21 is specifically configured to receive the identifier of the application and the state of the application that are sent by the user terminal by using the application layer protocol of the specified application, query a mapping relationship between an identifier of an application and a stream description of an application, so as to acquire the stream description of the application corresponding to the identifier of the application; or
the acquiring module 21 is specifically configured to parse a first packet in an application layer message at the user plane of the user terminal, capture a packet carrying a network-specific address, and acquire the identifier of the application, the stream description of the application, and the state of the application from the packet carrying the network-specific address.

In this embodiment, the technical solution of this embodiment is described in detail by taking that the acquiring module 21 may specifically be an application layer server or a service identification functional entity and the processing module 23 may specifically be a packet data network gateway as an example. When acquiring an identifier of an application and a state of the application from a user terminal, the application layer server or the service identification functional entity may query a mapping relationship between an identifier of an application and a service type and a mapping relationship between an identifier of an application and a stream description of an application, so as to acquire a service type corresponding to the identifier of the application and a stream description of the application corresponding to the identifier of the application, and finally send the identifier of the application (or the service type) and the stream description of the application to the policy and charging control function 22. The policy and charging control function 22 generates a policy and charging control rule according to pre-configured information, the identifier of the application (or the service type), and the stream description of the application.

Alternatively, when acquiring an identifier of an application and a state of the application from a user terminal, the application layer server or the service identification functional entity may query a mapping relationship between an identifier of an application and a service type, so as to acquire a service type corresponding to the identifier of the application, and finally send the identifier of the application (or the service type) to the policy and charging control function 22. The policy and charging control function 22 queries a mapping relationship between an identifier of an application (or a service type) and a stream description of an application, so as to acquire a stream description of the application corresponding to the identifier of the application (or the service type), and then generates a policy and charging control rule according to pre-configured information, the identifier of the application (or the service type), and the stream description of the application.

Further, in still another embodiment of the present invention, based on the embodiment shown in FIG. 6, the network-side device further includes an encapsulation processing module, configured to acquire a service information identifier corresponding to the matched packet, encapsulate the service information identifier in the matched packet, and send the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located.

The service information identifier includes the state of the application or the state of the application and one or a combination of the following: a service type of the matched packet, a user priority, and an operator policy.

It should be noted that the encapsulation processing module may be a core network gateway, for example, a public data network (Public Data Network; PDN for short) gateway (Gateway; GW for short), a gateway general packet radio service (General Packet Radio Service; GPRS for short) support node (Gateway GPRS Support Node; GGSN for short), an SGSN, or a Serving GW. In addition, the encapsulation processing module may also be arranged in the acquiring module 21.

Further, in another embodiment of the present invention, based on the embodiment shown in FIG. 6, the processing module 23 is specifically configured to: when the policy and charging control rule includes the stream description of the application, service information, and the identifier of the application or includes the stream description of the application, service information, and a service type and the state of the application is a foreground state, improve a bandwidth of the media data stream in which the matched packet is located and/or improve a scheduling priority of the media data stream in which the matched packet is located;
or
the processing module 23 is specifically configured to: when the policy and charging control rule includes the stream description of the application, service information, and the identifier of the application or includes the stream description of the application, service information, and a service type and the state of the application is a foreground state, improve a coding rate of the media data stream in which the matched packet is located.

The processing module 23 is specifically configured to: when the policy and charging control rule includes the stream description of the application, service information, and the identifier of the application or includes the stream description of the application, service information, and a service type and the state of the application is a background state, reduce a bandwidth of the media data stream in which the matched packet is located and/or reduce a scheduling priority of the media data stream in which the matched packet is located;
or
the processing module 23 is specifically configured to, when the policy and charging control rule includes the stream description of the application, service information, and the identifier of the application or includes the stream description of the application, service information, and a service type and the state of the application is a background state, reduce a coding rate of the media data stream in which the matched packet is located.

FIG. 7 is a schematic structural diagram of an embodiment of a user terminal according to the present invention. As shown in FIG. 7, the user terminal of this embodiment includes an acquiring module 31 and a sending module 32, where the acquiring module 31 is configured to acquire a state of an application, and the sending module 32 is configured to send the state of the application acquired by the acquiring module 31 to a network-side device, so that the network-side device performs, according to the state of the application, service quality control of network resources for a media data stream in which a packet that matches an acquired description of the application is located or performs, according to the state of the application, coding processing for a media data stream in which the matched packet is located.

The user terminal of this embodiment may execute the technical solution of the method embodiment shown in FIG. 3. Its implementation principle is similar, and therefore no further details are provided herein.

In this embodiment, a state of the application acquired by a user terminal is sent to a network-side device, so that the network-side device may perform, according to the state of the application, service quality control of network resources for a media data stream in which a packet that matches the acquired description of the application is located or perform, according to the state of the application, coding processing for a media data stream in which the matched packet is located. Because the network-side device may perform differential processing for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the embodiment shown in FIG. 7, the acquiring module 31 is further configured to acquire the description of the application, where the description of the application includes an identifier of the application or the identifier of the application and a stream description of the application. The sending module 32 is specifically configured to send the description of the application and the state of the application to the network-side device.

In addition, preferably, the sending module 32 is specifically configured to send an application layer message at a user plane of the user terminal to the network-side device, so that the network-side device parses a first packet in the application layer message, captures a packet carrying a network-specific address, and acquires the description of the application and the state of the application from the packet carrying the network-specific address; or
the sending module 32 is specifically configured to send an RRC message carrying the description of the application and the state of the application to the network-side device, so that the network-side device acquires the description of the application and the state of the application from the RRC message; or
the sending module 32 is specifically configured to send a non-access-stratum message carrying the description of the application and the state of the application to a mobility management entity, where the mobility management entity sends a control plane message carrying the description of the application and the state of the application to the network-side device, so that the network-side device acquires the description of the application and the state of the application from the control plane message; or
the sending module 32 is specifically configured to send the state of the application or the identifier of the application and the state of the application by using an application layer protocol of the application;
or
the sending module 32 is specifically configured to send the state of the application or the identifier of the application and the state of the application by using an application layer protocol of a specified application.

In this embodiment, for example, a manner of acquiring a description of an application and a state of the application is as follows: For an application visible to a terminal operating system, a description of the application and a state of the application may be provided by the operating system to a radio protocol stack or another application of the user terminal; for an application (for example, a Web application) invisible to the terminal operating system, a Web platform application (generally being a browser) may be provided to a radio protocol stack or another application.

In addition, an occasion for sending a description of an application and a state of the application is as follows: A user may switch between different applications, that is, an application in a foreground state and an application in a background state may change frequently; an application that has just switch from the foreground state to the background state may switch back to the foreground state, and an application that has just switch from the background state to the foreground state may also switch back to the background state; if such a switch occurs frequently and each change of an application in the foreground state and the background state is notified to a network-side device, which not only increases signaling and processing load between a user terminal and the network-side device, but also does not help to improve the network resource utilization and user experience. Therefore, the user terminal may immediately send a notification or locally perform some filtering processing each time when a state of an application changes. The user terminal may delay reporting when a state of an application changes frequently or send a notification until the state becomes steady, so as to prevent ping-pong effect. In addition, the user terminal may also record a behavior of the user and a characteristic of an application and perform special processing (not reporting a state change or reporting a specific state all the time) for such an application. The user terminal may also provide a human-machine interface for the user to set whether to report states of applications, whether to report a state of an application, whether to report an application as a certain state all the time, and the like.

The present invention further provides a packet processing system, including a user terminal and a network-side device. The user terminal may be the user terminal shown in FIG. 7 and may execute the technical solution of the method embodiment shown in FIG. 3; and the network-side device may be the network-side device shown in FIG. 4 or FIG. 5 or may also be the network-side device shown in FIG. 6. Its implementation principle is similar, and therefore no further details are provided herein.

Persons of ordinary skill in the art may understand that, all or a part of the steps of the foregoing method embodiments may be implemented by a program instructing relevant hardware. The foregoing program may be stored in a computer readable storage medium. When the program runs, the steps of the forgoing method embodiments are performed. The foregoing storage medium may include any mediums capable of storing program code, such as a ROM, a RAM, a magnetic disk, or an optical disc.

It should be noted that in the foregoing user equipment and base station embodiments, all units included are classified only according to functions and logic, but the present invention is not limited to the classification as long as a corresponding function can be implemented. In addition, a specific name of each functional unit is used to distinguish each other only, but not used to limit the protection scope of the present invention.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as the modifications and replacements do not cause the essence of corresponding technical solutions to depart from the scope of the technical solutions of the embodiments of the present invention.

Further embodiments of the present invention are provided in the following. It should be noted that the numbering used in the following section does not necessarily need to comply with the numbering used in the previous sections.
Embodiment 1. A packet processing method, comprising:
   Acquiring a description of an application and a state of the application; and
   acquiring a packet that matches the description of the application, and according to the state of the application, performing service quality control of network resources for a media data stream in which the matched packet is located or performing coding processing for a media data stream in which the matched packet is located.
Embodiment 2. The method according to embodiment 1, wherein the acquiring a description of an application and a state of the application comprises:
   resolving a first packet in an application layer message at a user plane of a user terminal, capturing a packet carrying a network-specific address, and acquiring the description of the application and the state of the application from the packet carrying the network-specific address; or
   acquiring the description of the application and the state of the application from a received RRC message that is sent by the user terminal; or
   acquiring the description of the application and the state of the application from a received control plane message that is sent by a mobility management entity; or
   receiving an identifier of the application and the state of the application that are sent by the user terminal by using an application layer protocol of the application; or
   receiving the state of the application that is sent by the user terminal by using the application layer protocol of the application, and identifying a second packet in the application layer message at the user plane of the user terminal, so as to acquire the identifier of the application or a stream description of the application; or
   receiving the identifier of the application and the state of the application that are sent by the user terminal by using an application layer protocol of a specified application, wherein:
      the description of the application is the identifier of the application or the stream description of the application.
Embodiment 3. The method according to embodiment 1 or 2, wherein when the description of the application is the identifier of the application, the acquiring a packet that matches the description of the application comprises:
   resolving received packets to acquire service types or host addresses of the received packets; and
   acquiring, according to a mapping relationship between an identifier of an application and a service type or a mapping relationship between an identifier of an application and a host address, a packet that matches the identifier of the application from the received packets.
Embodiment 4. The method according to any one of embodiments 1 to 3, wherein when the state of the application is a foreground state, the performing, according to the state of the application, service quality control of network resources for a media data stream in which the matched packet is located comprises:
   improving a bandwidth of the media data stream in which the matched packet is located; and/or
   improving a scheduling priority of the media data stream in which the matched packet is located; and
   the performing, according to the state of the application, coding processing for a media data stream in which the matched packet is located comprises:
      improving a coding rate of the media data stream in which the matched packet is located.
Embodiment 5. The method according to any one of embodiments 1 to 3, wherein when the state of the application is a background state, the performing, according to the state of the application, service quality control of network resources for a media data stream in which the matched packet is located comprises:
   reducing a bandwidth of the media data stream in which the matched packet is located; and/or
   reducing a scheduling priority of the media data stream in which the matched packet is located; and
   the performing, according to the state of the application, coding processing for a media data stream in which the matched packet is located comprises:
      reducing a coding rate of the media data stream in which the matched packet is located.
Embodiment 6. The method according to embodiment 5, wherein the background state is one of the following: background running, background suspension, screen lockup, screensaver, screen off, and a state that a user terminal is not used by a user.
Embodiment 7. A packet processing method, comprising:
   acquiring a description of an application and a state of the application;
   generating a policy and charging control rule according to prestored configuration information, the state of the application, and the description of the application;
   acquiring a packet that matches the description of the application; and
   according to the policy and charging control rule, performing service quality control of network resources for a media data stream in which the matched packet is located or performing coding processing for a media data stream in which the matched packet is located.
Embodiment 8. The method according to embodiment 7, wherein the description of the application comprises an identifier of the application and/or a stream description of the application, and then the acquiring a description of an application and a state of the application comprises:
   resolving a first packet in an application layer message at a user plane of the user terminal, capturing a packet carrying a network-specific address, and acquiring the identifier of the application and the state of the application from the packet carrying the network-specific address; or
   resolving the first packet, capturing a packet carrying a network-specific address, acquiring the identifier of the application and the state of the application from the packet carrying the network-specific address, and then querying a preset mapping relationship between an identifier of an application and a stream description of an application, so as to acquire the stream description of the application corresponding to the identifier of the application; or
   receiving the identifier of the application and the state of the application that are sent by the user terminal by using an application layer protocol of the application; or
   receiving the state of the application that is sent by the user terminal by using the application layer protocol of the application, and identifying a second packet in the application layer message at the user plane of the user terminal, so as to acquire the identifier of the application or the stream description of the application; or
   receiving the identifier of the application and the state of the application that are sent by the user terminal by using the application layer protocol of the application, and querying a mapping relationship between an identifier of an application and a stream description of an application, so as to acquire the stream description of the application corresponding to the identifier of the application; or
   receiving the identifier of the application and the state of the application that are sent by the user by using an application layer protocol of a specified application; or
   receiving the state of the application that is sent by the user terminal by using the application layer protocol of the specified application, and identifying received packets, so as to acquire the identifier of the application or the stream description of the application; or
   receiving the identifier of the application and the state of the application that are sent by the user terminal by using the application layer protocol of the specified application, and querying a mapping relationship between an identifier of an application and a stream description of an application, so as to acquire the stream description of the application corresponding to the identifier of the application; or
   resolving the first packet, capturing a packet carrying a network-specific address, and acquiring the identifier of the application, the stream description of the application, and the state of the application from the packet carrying the network-specific address.
Embodiment 9. The method according to embodiment 7 or 8, after the acquiring a packet that matches the description of the application, further comprising:
   acquiring a service information identifier corresponding to the matched packet, and encapsulating the service information identifier in the matched packet; and
   sending the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located; wherein:
      the service information identifier comprises the state of the application or the state of the application and one or a combination of the following: a service type of the matched packet, a user priority, and an operator policy.
Embodiment 10. The method according to embodiment 7 or 8, wherein the policy and charging control rule comprises the stream description of the application, service information, and the identifier of the application or comprises the stream description of the application, the service information, and a service type, and
   the service information comprises bandwidth and/or service quality information.
Embodiment 11. The packet processing method according to embodiment 10, wherein when the state of the application is a foreground state, the performing, according to the policy and charging control rule, service quality control of network resources for a media data stream in which the matched packet is located comprises:
   improving a bandwidth of the media data stream in which the matched packet is located; and/or
   improving a scheduling priority of the media data stream in which the matched packet is located; and
   the performing, according to the state of the application, coding processing for a media data stream in which the matched packet is located comprises:
      improving a coding rate of the media data stream in which the matched packet is located.
Embodiment 12. The packet processing method according to embodiment 10, wherein when the state of the application is a background state, the performing, according to the policy and charging control rule, service quality control of network resources for a media data stream in which the matched packet is located comprises:
   reducing a bandwidth of the media data stream in which the matched packet is located; and/or
   reducing a scheduling priority of the media data stream in which the matched packet is located; and
   the performing, according to the state of the application, coding processing for a media data stream in which the matched packet is located comprises:
      reducing a coding rate of the media data stream in which the matched packet is located.
Embodiment 13. The packet processing method according to any one of embodiments 7 to 10, wherein the state of the application comprises a foreground state and a background state, and the background state comprises one of the following: background running, background suspension, screen lockup, screensaver, screen off, and a state that a user terminal is not used by a user.
Embodiment 14. A packet processing method, comprising:
   acquiring a state of an application; and
   sending the state of the application to a network-side device, so that the network-side device performs, according to the state of the application, service quality control of network resources for a media data stream in which a packet that matches an acquired description of the application is located or performs, according to the state of the application, coding processing for a media data stream in which the matched packet is located.
Embodiment 15. The method according to embodiment 14, wherein the method further comprises:
   acquiring a description of the application; and
   then, the sending the state of the application to a network-side device comprises:
      sending the description of the application and the state of the application to the network-side device, wherein:
      the description of the application comprises an identifier of the application or the identifier of the application and a stream description of the application.
Embodiment 16. The packet processing method according to embodiment 14 or 15, wherein the sending the state of the application to a network-side device or sending the description of the application and the state of the application to the network-side device comprises:
   sending an application layer message at a user plane of a user terminal to the network-side device, so that the network-side device parses a first packet in the application layer message, captures a packet carrying a network-specific address, and acquires the description of the application and the state of the application from the packet carrying the network-specific address; or
   sending an RRC message carrying the description of the application and the state of the application to the network-side device, so that the network-side device acquires the description of the application and the state of the application from the RRC message; or
   sending a non-access-stratum message carrying the description of the application and the state of the application to a mobility management entity, wherein the mobility management entity sends a control plane message carrying the description of the application and the state of the application to the network-side device, so that the network-side device acquires the description of the application and the state of the application from the control plane message; or
   sending the state of the application or the identifier of the application and the state of the application by using an application layer protocol of the application; or
   sending the state of the application or the identifier of the application and the state of the application by using an application layer protocol of a specified application.
Embodiment 17. A network-side device, comprising:
   an acquiring module, configured to acquire a description of an application and a state of the application;
   a matching module, configured to acquire a packet that matches the description of the application acquired by the acquiring module; and
   a processing module, configured to: according to the state of the application acquired by the acquiring module, perform service quality control of network resources for a media data stream in which the matched packet acquired by the matching module is located or perform coding processing for a media data stream in which the matched packet is located.
Embodiment 18. The network-side device according to embodiment 17, wherein the acquiring module is specifically configured to parse a first packet in an application layer message at a user plane of the user terminal, capture a packet carrying a network-specific address, and acquire the description of the application and the state of the application from the packet carrying the network-specific address; or
   the acquiring module is specifically configured to acquire the description of the application and the state of the application from a received RRC message that is sent by the user terminal; or
   the acquiring module is specifically configured to acquire the description of the application and the state of the application from a received control plane message that is sent by a mobility management entity; or
   the acquiring module is specifically configured to receive an identifier of the application and the state of the application that are sent by the user terminal by using an application layer protocol of the application; or
   the acquiring module is specifically configured to receive the state of the application that is sent by the user terminal by using the application layer protocol of the application, and identify a second packet in the application layer message at the user plane of the user terminal, so as to acquire the identifier of the application or a stream description of the application; or
   the acquiring module is specifically configured to receive the identifier of the application and the state of the application that are sent by the user terminal by using an application layer protocol of a specified application, wherein:
   the description of the application is the identifier of the application or the stream description of the application.
Embodiment 19. The network-side device according to embodiment 17 or 18, wherein the matching module comprises:
   a resolving unit, configured to parse received packets to acquire service types or host addresses of the received packets; and
   a matching unit, configured to: when the description of the application acquired by the acquiring module is the identifier of the application, according to a mapping relationship between an identifier of an application and a service type or a mapping relationship between an identifier of an application and a host address, acquire a packet that matches the identifier of the application from the received packets.
Embodiment 20. The network-side device according to any one of embodiments 17 to 19, wherein the processing module is specifically configured to: when the state of the application is a foreground state, improve a bandwidth of the media data stream in which the matched packet is located and/or improve a scheduling priority of the media data stream in which the matched packet is located; or
   the processing module is specifically configured to: when the state of the application is a foreground state, improve a coding rate of the media data stream in which the matched packet is located.
Embodiment 21. The network-side device according to any one of embodiments 17 to 19, wherein the processing module is specifically configured to: when the state of the application is a background state, reduce a bandwidth of the media data stream in which the matched packet is located and/or reduce a scheduling priority of the media data stream in which the matched packet is located;
   or
   the processing module is specifically configured to: when the state of the application is a background state, reduce a coding rate of the media data stream in which the matched packet is located.
Embodiment 22. A network-side device, comprising:
   an acquiring module, configured to acquire a description of an application and a state of the application;
   a policy and charging control function, configured to generate a policy and charging control rule according to prestored configuration information and the state of the application and the description of the application that are acquired by the acquiring module; and
   a processing module, configured to acquire a packet that matches the description of the application acquired by the acquiring module, and according to the policy and charging control rule generated by the policy and charging control function, perform service quality control of network resources for a media data stream in which the matched packet is located or perform coding processing for a media data stream in which the matched packet is located.
Embodiment 23. The network-side device according to embodiment 22, wherein the acquiring module is specifically configured to parse a first packet in an application layer message at a user plane of the user terminal, capture a packet of a network-specific address, and acquire an identifier of the application and the state of the application from the packet; or
   the acquiring module is specifically configured to parse a first packet in an application layer message at the user plane of the user terminal, capture a packet carrying a network-specific address, acquire the identifier of the application and the state of the application from the packet carrying the network-specific address, and then query a preset mapping relationship between an identifier of an application and a stream description of an application, so as to acquire a stream description of the application corresponding to the identifier of the application; or
   the acquiring module is specifically configured to receive the identifier of the application and the state of the application that are sent by the user terminal by using an application layer protocol of the application; or
   the acquiring module is specifically configured to receive the state of the application that is sent by the user terminal by using the application layer protocol of the application, and identify a second packet in the application layer message at the user plane of the user terminal, so as to acquire the identifier of the application or a stream description of the application; or
   the acquiring module is specifically configured to receive the identifier of the application and the state of the application that are sent by the user terminal by using the application layer protocol of the application, and query an mapping relationship between an identifier of an application and a stream description of an application, so as to acquire the stream description of the application corresponding to the identifier of the application; or
   the acquiring module is specifically configured to receive the identifier of the application and the state of the application that are sent by the user by using an application layer protocol of a specified application; or
   the acquiring module is specifically configured to receive the identifier of the application and the state of the application that are sent by the user terminal by using the application layer protocol of the specified application, and query an mapping relationship between an identifier of an application and a stream description of an application, so as to acquire the stream description of the application corresponding to the identifier of the application; or
   the acquiring module is specifically configured to parse the first packet, capture a packet carrying a network-specific address, and acquire the identifier of the application, the stream description of the application, and the state of the application from the packet carrying the network-specific address, wherein:
   the description of the application comprises the identifier of the application and/or the stream description of the application.
Embodiment 24. The network-side device according to embodiment 22 or 23, further comprising an encapsulation processing module, configured to acquire a service information identifier corresponding to the matched packet, encapsulate the service information identifier in the matched packet, and send the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located, wherein:
   the service information identifier comprises the state of the application or the state of the application and one or a combination of the following: a service type of the matched packet, a user priority, and an operator policy.
Embodiment 25. The network-side device according to embodiment 24, wherein the processing module is specifically configured to: when the policy and charging control rule comprises the stream description of the application, service information, and the identifier of the application or comprises the stream description of the application, service information, and a service type and the state of the application is a foreground state, improve a bandwidth of the media data stream in which the matched packet is located and/or improve a scheduling priority of the media data stream in which the matched packet is located;
   or
   the processing module is specifically configured to: when the policy and charging control rule comprises the stream description of the application, service information, and the identifier of the application or comprises the stream description of the application, service information, and a service type and the state of the application is a foreground state, improve a coding rate of the media data stream in which the matched packet is located.
Embodiment 26. The network-side device according to embodiment 24, wherein the processing module is specifically configured to: when the policy and charging control rule comprises the stream description of the application, service information, and the identifier of the application or comprises the stream description of the application, service information, and a service type and the state of the application is a background state, reduce a bandwidth of the media data stream in which the matched packet is located and/or reduce a scheduling priority of the media data stream in which the matched packet is located;
   or
   the processing module is specifically configured to: when the policy and charging control rule comprises the stream description of the application, service information, and the identifier of the application or comprises the stream description of the application, service information, and a service type and the state of the application is a background state, reduce a coding rate of the media data stream in which the matched packet is located.
Embodiment 27. A user terminal, comprising:
   an acquiring module, configured to acquire a state of an application; and
   a sending module, configured to send the state of the application acquired by the acquiring module to a network-side device, so that the network-side device performs, according to the state of the application, service quality control of network resources for a media data stream in which a packet that matches an acquired description of the application is located or performs, according to the state of the application, coding processing for a media data stream in which the matched packet is located.
Embodiment 28. The user terminal according to embodiment 27, wherein the acquiring module is further configured to acquire the description of the application; and
   then, the sending module is specifically configured to send the description of the application and the state of the application that are acquired by the acquiring module to the network-side device, wherein:
   the description of the application comprises an identifier of the application or the identifier of the application and a stream description of the application.
Embodiment 29. The user terminal according to embodiment 27 or 28, wherein the sending module is specifically configured to send an application layer message at a user plane of the user terminal to the network-side device, so that the network-side device parses a first packet in the application layer message, captures a packet carrying a network-specific address, and acquires the description of the application and the state of the application from the packet carrying the network-specific address; or
   the sending module is specifically configured to send an RRC message carrying the description of the application and the state of the application to the network-side device, so that the network-side device acquires the description of the application and the state of the application from the RRC message; or
   the sending module is specifically configured to send a non-access-stratum message carrying the description of the application and the state of the application to a mobility management entity, wherein the mobility management entity sends a control plane message carrying the description of the application and the state of the application to the network-side device, so that the network-side device acquires the description of the application and the state of the application from the control plane message; or
   the sending module is specifically configured to send the state of the application or the identifier of the application and the state of the application by using an application layer protocol of the application; or
   the sending module is specifically configured to send the state of the application or the identifier of the application and the state of the application by using an application layer protocol of a specified application.
Embodiment 30. A packet processing system, comprising the user terminal according to any one of embodiments 27 to 29 and the network-side device according to any one of embodiments 17 to 21.
Embodiment 31. A packet processing system, comprising the user terminal according to any one of embodiments 27 to 29 and the network-side device according to any one of embodiments 22 to 26.

## Claims

1. A packet processing method, comprising:
acquiring (101), by a network-side device, a description of an application and a state of the application, wherein the description of the application comprises an identifier of the application or a stream description of the application; and
acquiring (102), by the network-side device, a packet that matches the description of the application; and
according to the state of the application,
performing (102), by the network-side device, service quality control of network resources for a media data stream in which the matched packet is located or performing, by the network-side device, coding processing for a media data stream in which the matched packet is located;
**characterized in that** the acquiring, by the network-side, the packet that matches the description of the application comprises:
when the description of an application is an identifier of the application, parsing, by the network-side device, received packets to acquire service types or host addresses of the received packets, and acquiring, by the network-side device, a packet that matches the identifier of the application from the received packets according to a mapping relationship between an identifier of an application and a service type or a mapping relationship between an identifier of an application and a host address;
when a description of an application is a stream description of the application, acquiring, by the network-side device, a packet that matches the stream description of the application directly.

2. The method according to claim 1, wherein the acquiring, by the network-side device, a packet that matches the description of the application comprises:
when the state of the application is the foreground state, improving, by the network-side device, a bandwidth of the media data stream in which the matched packet is located; or
when the state of the application is the foreground state, improving, by the network-side device, a coding rate of the media data stream in which the matched packet is located; or
when the state of the application is the background state, reducing, by the network-side device, a bandwidth of the media data stream in which the matched packet is located; or
when the state of the application is the background state, reducing, by the network-side device, a coding rate of the media data stream in which the matched packet is located.

3. The method according to claim 2, wherein improving, by the network-side device, a bandwidth of the media data stream in which the matched packet is located comprises:
improving, by the network-side device, a bandwidth for the application to access a network; and/or, improving, by the network-side device, scheduling priority of the media data stream in which the matched packet is located.

4. The method according to claim 2, wherein reducing, by the network-side device, a bandwidth of the media data stream in which the matched packet is located comprises:
reducing, by the network-side device, a bandwidth for the application to access a network is reduced; and/or, reducing, by the network-side device, a scheduling priority of the media data stream in which the matched packet is located.

5. A network-side device, comprising:
an acquiring module (11), configured to acquire a description of an application and a state of the application, wherein the description of the application comprises an identifier of the application or a stream description of the application;
a matching module (12), configured to acquire a packet that matches the description of the application acquired by the acquiring module; and
a processing module (13), configured to: perform, according to the state of the application, service quality control of network resources for a media data stream in which the matched packet is located, or configured to perform coding processing for a media data stream in which the matched packet is located;
**characterized in that** the matching module (12) is specifically configured:
when a description of an application is an identifier of the application, to parse received packets to acquire service types or host addresses of the received packets, and acquire a packet that matches the identifier of the application from the received packets according to a mapping relationship between an identifier of an application and a service type or a mapping relationship between an identifier of an application and a host address;
when a description of an application is a stream description of the application, to acquire a packet that matches the stream description of the application directly.

6. The network-side device according to claim 5, wherein the processing module is specifically configured to:
when the state of the application is the foreground state, improve a bandwidth of the media data stream in which the matched packet is located; or
when the state of the application is the foreground state, improve a coding rate of the media data stream in which the matched packet is located; or
when the state of the application is the background state, reduce a bandwidth of the media data stream in which the matched packet is located; or
when the state of the application is the background state, reduce a coding rate of the media data stream in which the matched packet is located.

7. The network-side device according to claim 6, wherein the processing module is specifically configured to improve a bandwidth of the media data stream in which the matched packet is located comprises:
improving a bandwidth for the application to access a network; and/or, improving scheduling priority of the media data stream in which the matched packet is located.

8. The network-side device according to claim 6, wherein the processing module is specifically configured to reduce a bandwidth of the media data stream in which the matched packet is located comprises:
reducing a bandwidth for the application to access a network; and/or reducing a scheduling priority of the media data stream in which the matched packet is located.

9. A computer-readable storage medium comprising instructions which, when executed by a computer, cause the computer to carry out the method of one of claims 1 to 4.

## Patentansprüche

1. Paketverarbeitungsverfahren, umfassend:
Erfassung (101) einer Beschreibung einer Anwendung und eines Zustands der Anwendung durch eine netzseitige Vorrichtung, wobei die Beschreibung der Anwendung eine Kennung der Anwendung oder eine Stream-Beschreibung der Anwendung umfasst; und
Erfassung (102) eines Pakets, das zu der Beschreibung der Anwendung passt, durch die netzseitige Vorrichtung; und
dem Zustand der Anwendung entsprechend
Durchführung (102) der Servicequalitätskontrolle von Netzwerkressourcen für einen Mediendatenstrom, in dem sich das abgeglichene Paket befindet, durch die netzseitige Vorrichtung, oder Durchführung von Codierungsverarbeitung für einen Mediendatenstrom, in dem sich das abgeglichene Paket befindet, durch die netzseitige Vorrichtung;
**dadurch gekennzeichnet, dass** die Erfassung durch die Netzseite, das Paket, das zu der Beschreibung der Anwendung passt, umfasst:
wenn die Beschreibung einer Anwendung eine Kennung der Anwendung ist, Parsen empfangener Pakete durch die netzseitige Vorrichtung zur Erfassung von Servicetypen oder Hostadressen der empfangene Pakete, und Erfassung eines Pakets, das zu der Kennung der Anwendung passt, durch die netzseitige Vorrichtung von den empfangenen Paketen nach einer Zuordnungsbeziehung zwischen einer Kennung einer Anwendung und einem Servicetyp oder einer Zuordnungsbeziehung zwischen einer Kennung einer Anwendung und einer Hostadresse;
wenn eine Beschreibung einer Anwendung eine Stream-Beschreibung der Anwendung ist, Erfassung eines Pakets, das direkt zu der Stream-Beschreibung der Anwendung passt, durch die netzseitige Vorrichtung.

2. Verfahren nach Anspruch 1, wobei die Erfassung eines Pakets, das zu der Beschreibung der Anwendung passt, durch die netzseitige Vorrichtung umfasst:
wenn der Zustand der Anwendung der Vordergrundzustand ist, Verbesserung einer Bandbreite des Mediendatenstroms, in dem sich das abgeglichene Paket befindet, durch die netzseitige Vorrichtung, oder
wenn der Zustand der Anwendung der Vordergrundzustand ist, Verbesserung einer Codierungsrate des Mediendatenstroms, in dem sich das abgeglichene Paket befindet, durch die netzseitige Vorrichtung, oder
wenn der Zustand der Anwendung der Hintergrundzustand ist, Verringerung einer Bandbreite des Mediendatenstroms, in dem sich das abgeglichene Paket befindet, durch die netzseitige Vorrichtung, oder
wenn der Zustand der Anwendung der Hintergrundzustand ist, Verringerung einer Codierungsrate des Mediendatenstroms, in dem sich das abgeglichene Paket befindet, durch die netzseitige Vorrichtung.

3. Verfahren nach Anspruch 2, wobei die Verbesserung einer Bandbreite des Mediendatenstroms, in dem sich das abgeglichene Paket befindet, durch die netzseitige Vorrichtung umfasst:
Verbesserung einer Bandbreite für die Anwendung zum Zugriff auf ein Netz durch die netzseitige Vorrichtung; und/oder Verbesserung der Planungspriorität des Mediendatenstroms, in dem sich das abgeglichene Paket befindet, durch die netzseitige Vorrichtung.

4. Verfahren nach Anspruch 2, wobei die Verringerung einer Bandbreite des Mediendatenstroms, in dem sich das abgeglichene Paket befindet, durch die netzseitige Vorrichtung umfasst:
Verringerung einer Bandbreite für die Anwendung zum Zugriff auf ein Netz durch die netzseitige Vorrichtung verringert wird; und/oder Verringerung einer Planungspriorität des Mediendatenstroms, in dem sich das abgeglichene Paket befindet, durch die netzseitige Vorrichtung.

5. Netzseitige Vorrichtung, umfassend:
ein Erfassungsmodul (11), konfiguriert zur Erfassung einer Beschreibung einer Anwendung und eines Zustands der Anwendung, wobei die Beschreibung der Anwendung eine Kennung der Anwendung oder der Stream-Beschreibung der Anwendung umfasst;
ein Abgleichmodul (12), konfiguriert zum Erfassen eines Pakets, das zu der Beschreibung der Anwendung passt, die durch das Erfassungsmodul erfasst wird; und
ein Verarbeitungsmodul (13), konfiguriert um: dem Zustand der Anwendung entsprechend die Servicequalitätskontrolle der Netzressourcen für einen Mediendatenstrom auszuführen, in dem sich das abgeglichene Paket befindet, oder konfiguriert, die Codierungsverarbeitung für einen Mediendatenstrom durchzuführen, in dem sich das abgeglichene Paket befindet;
**dadurch gekennzeichnet, dass** das Abgleichmodul (12) speziell konfiguriert ist:
wenn eine Beschreibung einer Anwendung eine Kennung der Anwendung ist, Parsen empfangener Paket zur Erfassung von Servicetypen oder Hostadressen der empfangenen Pakete und Erfassung eines Pakets, das zu der Kennung der Anwendung passt, von den empfangenen Paketen nach einer Zuordnungsbeziehung zwischen einer Kennung einer Anwendung und einem Servicetyp oder einer Zuordnungsbeziehung zwischen einer Kennung einer Anwendung und einer Hostadresse;
wenn eine Beschreibung einer Anwendung eine Stream-Beschreibung der Anwendung ist, Erfassung eines Pakets, das direkt zu der Stream-Beschreibung der Anwendung passt.

6. Netzseitige Vorrichtung nach Anspruch 5, wobei das Verarbeitungsmodul speziell konfiguriert ist, um:
wenn der Zustand der Anwendung der Vordergrundzustand ist, eine Bandbreite des Mediendatenstroms, in dem sich das abgeglichene Paket befindet, zu verbessern; oder
wenn der Zustand der Anwendung der Vordergrundzustand ist, eine Codierungsrate des Mediendatenstroms, in dem sich das abgeglichene Paket befindet, zu verbessern; oder
wenn der Zustand der Anwendung der Hintergrundzustand ist, eine Bandbreite des Mediendatenstroms, in dem sich das abgeglichene Paket befindet, zu verringern; oder
wenn der Zustand der Anwendung der Hintergrundzustand ist, eine Codierungsrate des Mediendatenstroms, in dem sich das abgeglichene Paket befindet, zu verringern.

7. Netzseitige Vorrichtung nach Anspruch 6, wobei das Verarbeitungsmodul speziell konfiguriert ist, eine Bandbreite des Mediendatenstroms, in dem sich das abgeglichene Paket befindet, zu verbessern, umfasst:
Verbesserung einer Bandbreite für die Anwendung zum Zugriff auf ein Netz; und/oder, Verbesserung der Planungspriorität des Mediendatenstroms, in dem sich das abgeglichene Paket befindet.

8. Netzseitige Vorrichtung nach Anspruch 6, wobei das Verarbeitungsmodul speziell konfiguriert ist, eine Bandbreite des Mediendatenstroms, in dem sich das abgeglichene Paket befindet, zu verringern, umfasst:
Verringerung einer Bandbreite für die Anwendung zum Zugriff auf ein Netz; und/oder Verringerung einer Planungspriorität des Mediendatenstroms, in dem sich das abgeglichene Paket befindet.

9. Computerlesbares Speichermedium, umfassend Anweisungen, die bei Ausführung durch einen Computer, den Computer veranlassen, das Verfahren nach einem der Ansprüche 1 bis 4 auszuführen.

## Revendications

1. Procédé de traitement de paquets, comprenant les étapes consistant à :
acquérir (101), par un dispositif de côté réseau, une description d'une application et un état de l'application, la description de l'application comprenant un identifiant de l'application ou une description de flux de l'application ; et
acquérir (102), par le dispositif de côté réseau, un paquet qui concorde avec la description de l'application ; et
d'après l'état de l'application,
effectuer (102), par le dispositif de côté réseau, un contrôle de qualité de service de ressources réseau destinées à un flux de données multimédia dans lequel le paquet concordant est situé ou effectuer, par le dispositif de côté réseau, un traitement de codage pour un flux de données multimédia dans lequel le paquet concordant est situé ;
**caractérisé en ce que** l'acquisition, par le côté réseau, du paquet qui concorde avec la description de l'application comprend les étapes consistant à :
lorsque la description d'une application est un identifiant de l'application, analyser, par le dispositif de côté réseau, les paquets reçus pour acquérir des types de service ou des adresses d'hôte des paquets reçus, et acquérir, par le dispositif de côté réseau, un paquet qui concorde avec l'identifiant de l'application dans les paquets reçus selon une relation de correspondance entre un identifiant d'une application et un type de service ou une relation de correspondance entre un identifiant d'une application et une adresse d'hôte ;
lorsqu'une description d'une application est une description de flux de l'application, acquérir, par le dispositif de côté réseau, un paquet qui concorde directement avec la description de flux de l'application.

2. Procédé selon la revendication 1, dans lequel l'acquisition, par le dispositif de côté réseau, d'un paquet qui concorde directement avec la description de flux de l'application comprend les étapes consistant à :
lorsque l'état de l'application est l'état d'avant-plan, améliorer, par le dispositif de côté réseau, une largeur de bande du flux de données multimédia dans lequel le paquet concordant est situé ; ou
lorsque l'état de l'application est l'état d'avant-plan, améliorer, par le dispositif de côté réseau, un taux de codage du flux de données multimédia dans lequel le paquet concordant est situé ; ou
lorsque l'état de l'application est l'état d'arrière-plan, réduire, par le dispositif de côté réseau, une largeur de bande du flux de données multimédia dans lequel le paquet concordant est situé ; ou
lorsque l'état de l'application est l'état d'arrière-plan, réduire, par le dispositif de côté réseau, un taux de codage du flux de données multimédia dans lequel le paquet concordant est situé.

3. Procédé selon la revendication 2, dans lequel l'amélioration, par le dispositif de côté réseau, d'une largeur de bande du flux de données multimédia dans lequel le paquet concordant est situé consiste à :
améliorer, par le dispositif de côté réseau, une largeur de bande utilisée par l'application pour accéder à un réseau ; et/ou, améliorer, par le dispositif de côté réseau, une priorité d'ordonnancement du flux de données multimédia dans lequel le paquet concordant est situé.

4. Procédé selon la revendication 2, dans lequel la réduction, par le dispositif de côté réseau, d'une largeur de bande du flux de données multimédia dans lequel le paquet concordant est situé consiste à :
réduire, par le dispositif de côté réseau, une largeur de bande utilisée par l'application pour accéder à un réseau est réduite ; et/ou, réduire, par le dispositif de côté réseau, une priorité d'ordonnancement du flux de données multimédia dans lequel le paquet concordant est situé.

5. Dispositif de côté réseau, comprenant :
un module d'acquisition (11), configuré pour acquérir une description d'une application et un état de l'application, la description de l'application comprenant un identifiant de l'application ou une description de flux de l'application ;
un module de concordance (12), configuré pour acquérir un paquet qui concorde avec la description de l'application acquise par le module d'acquisition ; et
un module de traitement (13), configuré pour : effectuer, d'après l'état de l'application, un contrôle de qualité de service de ressources réseau destinées à un flux de données multimédia dans lequel le paquet concordant est situé, ou configuré pour effectuer un traitement de codage pour un flux de données multimédia dans lequel le paquet concordant est situé ;
**caractérisé en ce que** le module de concordance (12) est spécifiquement configuré :
lorsqu'une description d'une application est un identifiant de l'application, pour analyser les paquets reçus pour acquérir des types de service ou des adresses d'hôte des paquets reçus, et acquérir un paquet qui concorde avec l'identifiant de l'application dans les paquets reçus selon une relation de correspondance entre un identifiant d'une application et un type de service ou une relation de correspondance entre un identifiant d'une application et une adresse d'hôte ;
lorsqu'une description d'une application est une description de flux de l'application, pour acquérir un paquet qui concorde directement avec la description de flux de l'application.

6. Dispositif de côté réseau selon la revendication 5, dans lequel le module de traitement est spécifiquement configuré pour :
lorsque l'état de l'application est l'état d'avant-plan, améliorer une largeur de bande du flux de données multimédia dans lequel le paquet concordant est situé ; ou
lorsque l'état de l'application est l'état d'avant-plan, améliorer un taux de codage du flux de données multimédia dans lequel le paquet concordant est situé ; ou
lorsque l'état de l'application est l'état d'arrière-plan, réduire une largeur de bande du flux de données multimédia dans lequel le paquet concordant est situé ; ou
lorsque l'état de l'application est l'état d'arrière-plan, réduire un taux de codage du flux de données multimédia dans lequel le paquet concordant est situé.

7. Dispositif de côté réseau selon la revendication 6, dans lequel le module de traitement est spécifiquement configuré pour améliorer une largeur de bande du flux de données multimédia dans lequel le paquet concordant est situé comprend :
améliorer une largeur de bande utilisée par l'application pour accéder à un réseau ;
et/ou, améliorer une priorité d'ordonnancement du flux de données multimédia dans lequel le paquet concordant est situé.

8. Dispositif de côté réseau selon la revendication 6, dans lequel le module de traitement est spécifiquement configuré pour réduire une largeur de bande du flux de données multimédia dans lequel le paquet concordant est situé comprend :
réduire une largeur de bande utilisée par l'application pour accéder à un réseau ; et/ou réduire une priorité d'ordonnancement du flux de données multimédia dans lequel le paquet concordant est situé.

9. Support de stockage lisible par ordinateur, contenant des instructions qui, lorsqu'elles sont exécutées par un ordinateur, amènent l'ordinateur à exécuter le procédé selon l'une des revendications 1 à 4.
